Europäisches Patentamt

European Patent Office

Office européen des brevets

(19)

(11) Veröffentlichungsnummer: **0 258 738 B1**

# EUROPÄISCHE PATENTSCHRIFT

(12)

(45) Veröffentlichungstag der Patentschrift: **02.10.91**

(51) Int. Cl.⁵: **B60S 1/34**, B60S 1/08

(21) Anmeldenummer: **87112014.3**

(22) Anmeldetag: **19.08.87**

(54) Scheibenreinigungsvorrichtung für Kraftfahrzeuge.

(30) Priorität: **21.08.86 DE 3628342**

(43) Veröffentlichungstag der Anmeldung:
**09.03.88 Patentblatt 88/10**

(45) Bekanntmachung des Hinweises auf die
Patenterteilung:
**02.10.91 Patentblatt 91/40**

(84) Benannte Vertragsstaaten:
**DE ES FR GB IT SE**

(56) Entgegenhaltungen:
**DE-A- 3 428 710**
**FR-A- 2 507 554**

**PATENT ABSTRACTS OF JAPAN, Band 8, Nr.
267 (M-343) [1704], 7. Dezember 1984; & JP-
A-59 140 147 (HINO JIDOSHA KOGYO K.K.)
11.08.1984**

(73) Patentinhaber: **Bayerische Motoren Werke Aktiengesellschaft
Patentabteilung AJ-30 Postfach 40 02 40 Petuelring 130
W-8000 München 40(DE)**

(72) Erfinder: **Ditzer, Erich
Lerchenauerstrasse 40
W-8000 München 40(DE)**
Erfinder: **Hasenknopf, Ludwig
Hans-Jakob-Strasse 101
W-8000 München 82(DE)**

(74) Vertreter: **Bullwein, Fritz
Bayerische Motoren Werke Aktiengesellschaft Postfach 40 02 40 Petuelring 130 AJ-
33
W-8000 München 40(DE)**

**Beschreibung**

Die Erfindung bezieht sich auf eine Scheibenreinigungsvorrichtung nach dem Oberbegriff des Patentanspruchs 1.

Eine derartige Vorrichtung ist aus der DE A-3428710 bekannt. Dabei wird eine geschwindigkeitsabhängige, sog. meßwertabhängige Verstellung während eines Wischvorgangs durchgeführt. Bei Nicht-Wischbetrieb wird ein vorgegebener Anpreßdruck eingestellt. Dieser liegt entweder mittig zwischen dem Minimal- und dem Maximalwert der meßwertabhängigen Verstellung oder nahe dem Minimalwert bzw. Maximalwert. Von diesem Anpreßdruck aus soll der meßwertabhängige Anpreßdruck beim Wischbetrieb möglichst schnell angefahren werden.

Ein konstanter Anpreßdruck bei Nicht-Wischbetrieb stellt stets einen Kompromiß dar zwischen den Anforderungen, für unterschiedliche Fahrzeuggeschwindigkeiten beim Wischbetrieb schnell und sicher den richtigen Anpreßdruck bereitzustellen. Liegt der konstante Anpreßdruck bei dem Wert, der für hohe Fahrzeuggeschwindigkeiten erforderlich ist, so ergeben sich neben einer starken Beanspruchung des Wischblatts bei Nicht-Wischbetrieb Antwortprobleme der Vorrichtung bei Einstellen des Wischbetriebs bei niedriger Fahrzeuggeschwindigkeit. Entsprechendes gilt umgekehrt bei niedrigen konstantem Anpreßdruck und Einstellen des Wischbetriebs bei hoher Fahrzeuggeschwindigkeit.

Aus der DE C-3148253 ist es grundsätzlich bekannt, die Anpreßkraft abhängig von der Fahrzeuggeschwindigkeit einzustellen. Ferner ist es aus der DE B-2314724 bekannt, die Anpreßkraft entsprechend dem Verlauf der zu reinigenden Oberfläche variabel einzustellen.

Der Erfindung liegt die Aufgabe zugrunde, den Wischarm bei Beginn des Wischbetriebs bereits mit ausreichendem Anpreßdruck auf der zu reinigenden Oberfläche zu halten, bzw. bei zusätzlichem Waschbetrieb eine sichere Reinigung der Oberfläche zu gewährleisten. Dabei soll die Zeit, die nach dem Einstellen des Wischbetriebs erforderlich ist, um die richtige Anpreßkraft einzustellen, bei gleichzeitig geringer Beanspruchung des Wischblatts möglichst gering sein.

Die Erfindung löst diese Aufgabe durch die kennzeichnenden Merkmale des Patentanspruchs 1.

Die Erfindung geht zunächst davon aus, daß die Einstellung der Anpreßkraft eine gewisse Zeit benötigt. Werden die Maßnahmen zur Erhöhung der Anpreßkraft auf den erforderlichen Wert zu Beginn des Wischbetriebs eingeleitet, so führt dies zu einem Wischbetrieb mit nicht ausreichendem Anpreßdruck während des ersten Wischzyklus bzw. bei langsamerem Aufbau der Anpreßkraft während einiger Wischzyklen. Da der Wischbetrieb in der Regel erst dann eingeschaltet wird, wenn dies dringend erforderlich ist, führt dies insbesondere bei hohen Fahrzeuggeschwindigkeiten zu einer sicherheitsprekären Situation. Erst nach einer in der Regel viel zu langen Zeit, bei der das Kraftfahrzeug einen erheblichen Weg zurücklegt, ist mit einer ausreichenden Reinigungswirkung zu rechnen.

Entsprechendes gilt bei Einstellen des Waschbetriebs zusätzlich zum Wischbetrieb. Durch das Aufbringen einer erhöhten Flüssigkeitsmenge ist es auch in diesem Fall erforderlich, eine hinreichend große Anpreßkraft bereits bei Aufbringen der zusätzlichen Flüssigkeitsmenge vorzusehen, da nur dann eine ausreichende Reinigungswirkung geleistet ist. Der in der Regel langsame Aufbau der Anpreßkraft würde nun entsprechend dazu führen, daß die Anpreßkraft während der Anfangsphase des Wisch-/Waschbetriebs nicht ausreichend ist. Die Folgen sind genauso kritisch wie im vorher genannten Fall zum Beginn des reinen Wischbetriebs.

Durch die Erfindung wird erreicht, daß zu Beginn des Wischbetriebs und/oder des zusätzlichen Waschbetriebs die Anpreßkraft das erforderliche Maß besitzt. Bereits während des erstens Wischzyklus ist somit eine ausreichende Reinigungswirkung sichergestellt. Dadurch wird die Verkehrssicherheit deutlich erhöht.

Weiterbildungen der Erfindung beschäftigen sich mit der Einstellung der Anpreßkraft in zwei bzw. drei Stufen. Für den ersten Fall besteht die Weiterbildung darin, daß der Übergang zwischen den Stufen bei Wischbetrieb geschwindigkeitsabhängig erfolgt und daß bei Nicht-Wischbetrieb stets die anpreßkraftmäßig niedrigere Grundstufe und/oder bei zusätzlichem Waschbetrieb stets die anpreßkraftmäßig höhere Maximalstufe eingestellt ist.

Für die Einstellung der Anpreßkraft in drei Stufen ist vorgesehen, daß die Einstellung der Anpreßkraft bei Wischbetrieb geschwindigkeitsabhängig zusätzlich in einer Mittelstufe vorgenommen ist, die gegenüber der Grundstufe eine höhere und gegenüber der Maximalstufe eine niedrigere Anpreßkraft aufweist und daß die Grundstufe bei Nicht-Wischbetrieb auch bei einer Fahrzeuggeschwindigkeit eingestellt ist, bei der bei Wischbetrieb die Mittel-oder die Maximalstufe eingestellt ist und/oder bei Waschbetrieb die Mittel- und/oder die Maximalstufe bereits bei einer Fahrzeuggeschwindigkeit eingestellt ist, bei der bei Wischbetrieb die Grund-und/oder Mittelstufe eingestellt ist.

Beiden Weiterbildungen ist gemeinsam, daß die Einstellung der Anpreßkraft in Stufen erfolgt, die abhängig von der Fahrzeuggeschwindigkeit sind. Bei Nicht-Wischbetrieb ist die eingestellte Stufe, soweit dies möglich ist, gegenüber dem Wischbetrieb um eine bzw. im Falle von drei Stufen um möglicherweise auch zwei Stufen verringert. Bei Waschbetrieb ist umgekehrt die Einstellung der Anpreßkraft um eine bzw. um zwei Stufen gegenüber dem reinen Wischbetrieb erhöht. Eine ggf. erforderliche Erhöhung der Anpreßkraft erfolgt dann in der Regel lediglich um eine Stufe. Die dafür erforderlich Zeit ist gegenüber der Einstellung der Anpreßkraft auf die erforderliche Stärke erst im Bedarfsfall und ausgehend von dem Niveau bei stehendem Kraftfahrzeug deutlich verringert.

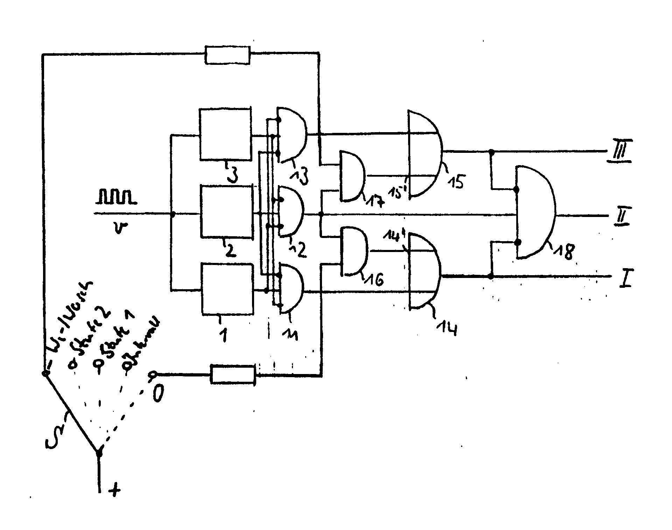

Anhand eines in der Zeichnung dargestellten Ausführungsbeispiels ist die Erfindung weiter erläutert.

Die schematisch dargestellte Schaltanordnung für eine Scheibenreinigungsvorrichtung von Kraftfahrzeugen dient dazu, ein nicht dargestelltes Stellglied für einen ebenfalls nicht gezeigten Wischarm in drei Stufen für eine Grundstellung I, eine Mittelstellung II und eine Maximalstellung III zu steuern. In der Grundstellung I ist die Anpreßkraft des Wischarms gegenüber Ausgangslage erhöht. Der Wischarm besitzt hinsichtlich seiner Anpreßkraft diese Ausgangslage bei stehendem Kraftfahrzeug. In der Einstellung II des Stellgliedes ist die Anpreßkraft höher als in der Grundstellung I. In der Einstellung III ist diese Anpreßkraft höher als in der Mittelstellung II.

Der Übergang zwischen den drei Stufen für die Anpreßkraft und damit zwischen den Einstellungen I, II und III des Stellgliedes soll beim Wischbetrieb des Wischarms abhängig von der Fahrzeuggeschwindigkeit erfolgen. Hierzu ist das Ausgangssignal eines nicht dargestellten Geschwindigkeitsgebers des Ausgangssignals v eine Geschwindigkeitsgebers auf drei Integratoren 1, 2 und 3 mit nachgeschalteten Schwellwertschaltern (nicht dargestellt) geführt. Die Ausgänge der Schwellwertschalter sind mit UND-Gliedern 11, 12 und 13 in der dargestellten Weise verbunden. Durch die Invertierung von jeweils zwei der drei Eingänge der UND-Glieder 11 bis 13 wird erreicht, daß die Fahrzeuggeschwindigkeit in drei Bereiche aufgeteilt ist und in jedem dieser Bereiche eines der UND-Glieder 11 bis 13 einen Ausgangszustand besitzt, der sich von dem der anderen unterscheidet. Sollen beispielsweise die den Integratoren 1 bis 3 nachgeschalteten Schwellwertschalter bei Geschwindigkeiten von 5, 130 bzw. 180 km/h ansprechen, so ist für Geschwindigkeiten zwischen 5 und 130 km/h der zum Integrator 1 führende Eingang des UND-Glieds 11 spannungsmäßig in einem Zustand, der sich von dem entsprechenden Eingang der UND-Glieder 12 und 13 unterscheidet. Entsprechendes gilt für den Eingang des UND-Gliedes 12 für Geschwindigkeiten zwischen 130 und 180 km/h bzw. den Eingang des UND-Glieds 13 für Geschwindigkeiten über 180 km/h.

Werden die Ausgänge der UND-Glieder 11 bis 13 direkt zur Steuerung des Stellglieds benutzt, so ergäbe sich eine Einstellung des Stellglieds in den drei Stufen I bis III entsprechend den drei Stufen für die Anpreßkraft lediglich in Abhängigkeit der Fahrzeuggeschwindigkeit. Der Übergang zwischen den einzelnen Stufen würde bei 130 bzw. 180 km/h erfolgen.

Es soll nun zusätzlich die Möglichkeit gezeigt werden, die geschwindigkeitsabhängig eingestellte Stufe sowohl beim Waschbetrieb gegenüber dem Wischbetrieb zu erhöhen bzw. bei Nicht-Wischbetrieb gegenüber dem Wischbetrieb zu erniedrigen. Der Einfachheit halber ist dies nur für die Einstellung II gezeigt. Hierzu ist den UND-Gliedern 11 und 13 jeweils ein ODER-Glied 14 bzw. 15 nachgeschaltet. An den zweiten Eingängen 14' bzw. 15' der ODER-Glieder sind diese mit den Ausgängen von UND-Gliedern 16 bzw. 17 verbunden. Die UND-Glieder sind einerseits am Ausgang des UND-Gliedes 12 und andererseits an einem Wischer-/ Wascher-Schalters angeschlossen der bei Nicht-Wischbetrieb den Eingang des UND-Glieds 16 und bei Waschbetrieb den Eingang des UND-Glieds 17 schaltet. Die Ausgänge der ODER-Glieder 14 und 15 sind einerseits direkt zur Steuerung des Stellglieds für die Stufen I bzw. III verwendet und andererseits invertiert zusammen mit dem Ausgang des UND-Glieds 12 an den Eingängen eines weiteren UND-Glieds 18 angeschlossen, dessen Ausgang zur Steuerung des Stellglieds für die Stufe II dient.

Bei (reinem) Wischbetrieb, z.B. in dem Betriebsartigen Intervall, Stufe 1 und Stufe 2 schaltet bei einer Fahrzeuggeschwindigkeit zwischen 130 und 180 km/h das UND-Glied 18 durch, da die ODER-Glieder 14 und 15 an ihren Ausgängen nicht aktiviert sind.

Wird im angegebenen Geschwindigkeitsbereich zusätzlich der Waschbetrieb eingestellt, so schaltet das UND-Glied 17 durch und aktiviert den Ausgang des ODER-Glieds 15. Dadurch wird das Stellglied in der Stufe III eingestellt. Gleichzeitig wird das UND-Glied 18 in seinem Ausgangszustand deaktiviert und die Einstellung II des Stellglieds ausgeschaltet.

Entsprechendes geschieht im angegebenen Geschwindigkeitsbereich, wenn der Wischbetrieb ausgeschaltet wird. In diesem Fall aktiviert das UND-Glied 16 das ODER-Glied 14 und führt zur Einstellung des Stellglieds für die Anpreßkraft in die Stellung I, während gleichzeitig das UND-Glied 18 an seinen Ausgang deaktiviert und die Stellung II ausgeschaltet wird. Dadurch kommt es zu einer Erhöhung bzw. einer Verringerung der Anpreßkraft bei Einstellen des Waschbetriebs bzw. Bei Nicht-Wischbetrieb gegenüber dem Wischbetrieb im betrachteten Geschwindigkeitsbereich von 130 bis 180 km/h.

Entsprechend kann für den Geschwindigkeitsbereich unter 130 km/h durch eine entsprechende Beschaltung anstelle der Einstellung des Stellglieds in der Stellung I bei Waschbetrieb die Stellung II bzw. bei Geschwindigkeiten über 180 km/h anstelle der Einstellung III bei Nicht-Wischbetrieb die Stellung II eingestellt werden. Dadurch wird eine Anpassung der Anpreßkraft an die tatsächlichen Bedürfnisse erreicht und dem Umstand Rechnung getragen, daß das Aufbringen der Anpreßkraft aufgrund konstruktiver Gegebenheiten nicht schlagartig zu Beginn des Wischbetriebs bzw. des Waschbetriebs erfolgt. Nicht dargestellt, jedoch prinzipiell möglich ist die Überlagerung der dargestellten, Einstellung der Anpreßkraft in mehreren Stufen durch eine von der Lage des Wischarms auf der zu reinigenden Oberfläche abhängige Variation der Anpreßkraft. Die dargestellte Einstellung der Anpreßkraft in Stufen ist dann der Ausgangspunkt für die lageabhängige Variation der Anpreßkraft.

**Patentansprüche**

1. Scheibenreinigungsvorrichtung für Kraftfahrzeuge mit einem Wischarm, der mit von der Fahrzeuggeschwindigkeit abhängig variabler Anpreßkraft auf der zu reinigenden Oberfläche aufliegt und dessen Anpreßkraft gegenüber dem stehenden Fahrzeug erhöht ist, dadurch gekennzeichnet, daß ein die Anpreßkraft erzeugendes Stellglied bei Nicht-Wischbetrieb eine um ein vorgegebenes Maß kleinere Anpreßkraft als beim Wischbetrieb und/oder bei zusätzlichem Waschbetrieb eine um ein vorgegebenes Maß größere Anpreßkraft als beim Wischbetrieb erzeugt.

2. Scheibenreinigungsvorrichtung nach Anspruch 1, dadurch gekennzeichnet, das die Erhöhung der Anpreßkraft in zwei Stufen vorgenommen ist, daß der Übergang zwischen den Stufen I, II, III bei Wischbetrieb geschwindigkeitsabhängig erfolgt und daß bei Nicht-Wischbetrieb stets die anpreßkraftmäßig niedrigere Grundstufe (I) und/oder bei zusätzlichem Waschbetreib stets die anpreßkraftmäßig höhere Maximalstufe (III) eingestellt ist.

3. Scheibenreinigungsvorrichtung nach Anspruch 2, dadurch gekennzeichnet, das die Einstellung der Anpreßkraft bei Wischbetrieb geschwindigkeitsabhängig zusätzlich in einer Mittelstufe (II) vorgenommen ist, die gegenüber der Grundstufe (I) einer höhere und gegenüber der Maximalstufe (III) eine niedrigere Anpreßkraft aufweist und daß die Grundstufe (I) bei Nicht-Wischbetrieb auch bei einer Fahrzeuggeschwindigkeit eingestellt ist, bei der bei Wischbetrieb die Mittel- (II) oder die Maximalstufe (III) eingestellt ist und/oder bei Waschbetrieb die Mittel- und/oder die Maximalstufe (III) bereits bei einer Fahrzeuggeschwindigkeit eingestellt ist, bei der bei Wischbetrieb die Grund- (I) und/oder Mittelstufe (II) eingestellt ist.

**Claims**

1. A motor-vehicle window-cleaning device comprising a wiper arm which bears with a variable contact pressure, depending on the speed of the vehicle, on the surface to be cleaned, the contact pressure being greater than when the vehicle is stationary, characterised in that, during non-wiping operation, an actuator generating the contact pressure generates a contact pressure lower by a preset amount than during wiping operation and/or during additional washing operation it generates a contact pressure greater by a preset amount than during wiping operation.

2. A window-cleaning device according to claim 1, characterised in that the contact pressure is increased in two stages, the transition between stages I, II and III is made in dependence on speed during wiping operation and the lower contact pressure stage (I) is always set during non-wiping operation and/or the higher or maximum contact-pressure stage (III) is always set during additional washing operation.

3. A window-cleaning device according to claim 2, characterised in that, during wiping operation, the adjustment of contact pressure in dependence on speed is additionally made in a medium or intermediate stage (II) where the contact pressure is higher than in the basic stage (I) and lower than in the maximum stage (III), and during non-wiping operation the basic stage (I) is also set at a vehicle speed at which the medium stage (II) or the maximum stage (III) is set during wiping operation and/or during washing operation the medium and/or the maximum stage (III) is set at a vehicle speed at which the basic stage (I) and/or the medium stage (II) during wiping operation is already set.

**Revendications**

1. Dispositif de nettoyage de pare-brise pour véhicules automobiles, comportant un bras de monture d'essuie-glace qui appuie sur la surface à nettoyer avec une force de pression variable en fonction de la vitesse du véhicule et dont la force de pression est augmentée vis à vis du véhicule immobile, caractérisé en ce qu'un organe de réglage agissant sur la force de pression, crée dans le cas d'arrêt de l'essuie-glace, une force de pression de valeur donnée inférieure à celle de la fonction balayage et/ou en cas de la marche lavage additionnel, provoque une force de pression de valeur donnée supérieure à celle de la fonction balayage.

2. Dispositif de nettoyage de pare-bise selon la revendication 1, caractérisé en ce que l'augmentation de la force de pression est réalisée en deux étages, en ce que la transition entre les étages I, II, III est réalisée pendant le travail de balayage en fonction de la vitesse et en ce qu'à l'arrêt de l'essuie-glace, la force de pression est toujours réglée à l'étage de départ I le plus bas et/ou pendant la fonction du lavage additionnel, la force de pression est toujours ajustée à l'étage maximal le plus élevé.

3. Dispositif de nettoyage de pare-brise selon la revendication 2, caractérisé en ce que la mise en place de la force de pression est prévue en plus en fonction de la vitesse pour la marche en balayage dans une position moyenne II, qui comporte, par rapport à l'étage de départ I, une force de pression plus grande et, par rapport à l'étage maximal III, une force de pression plus faible et en ce que se trouve inséré, à l'arrêt de l'essuie-glace, l'étage de départ I, même pour une vitesse du véhicule, dans laquelle en marche de balayage, est inséré l'étage moyen II ou l'étage maximal III et/ou avec la fonction lavage est déjà inséré, par suite de la vitesse du véhicule, l'étage moyen II et/ou l'étage maximal III, vitesse avec laquelle pour la fonction balayage, est inséré l'étage de départ I et/ou l'étage moyen II.